# DEMANDE DE BREVET EUROPEEN

(11) **EP 1 244 034 A1**
(43) Date de publication de la demande: **25.09.2002**
(21) Numéro de dépôt: 02075982.5
(22) Date de dépôt: 12.03.2002
(51) Int. Cl.: G06F 17/30, H04L 29/08

(54) **Procédé de transfert d'une certaine version d'un objet**

(30) Priorité: 20.03.2001 FR 0103778
(71) Demandeur: Koninklijke Philips Electronics N.V., 5621 BA Eindhoven (NL)
(72) Inventeur: Devillers, Sylvain, 75008 Paris (FR)
(74) Mandataire: de la Fouchardière, Marie-Noelle

(57) **Abrégé**

L'invention propose un système de transfert d'un objet d'une entité source vers une entité destination, dans lequel :
l'entité source comporte :
   - des moyens de stockage d'au moins un fichier progressif organisé en plusieurs parties et contenant une version maximum d'un objet,
   - des moyens de stockage d'au moins un document informatique décrivant une page destinée à être affichée sur un écran, ledit document comportant un point d'accès (une inclusion ou un lien) qui spécifie ledit fichier progressif, ledit point d'accès spécifiant au moins une ou plusieurs parties dudit fichier progressif correspondant à au moins une version dudit objet,
   - et des moyens de transmission du document informatique vers l'entité destination, et de tout ou partie du fichier progressif,
et l'entité destination comporte :
   - des moyens de réception et d'interprétation dudit document informatique,
   - et des moyens de transmission d'une requête vers ladite entité source, ladite requête spécifiant une ou plusieurs parties dudit fichier progressif, obtenues par lecture dudit point d'accès en vue du transfert de la ou desdites parties du fichier progressif, de ladite entité source vers ladite entité destination.

## Description

### Domaine de l'invention

La présente invention concerne un procédé de transfert d'un objet, d'une entité source vers une entité destination, comportant une étape de transmission d'une requête de ladite entité destination vers ladite entité source, ladite requête spécifiant une ou plusieurs parties d'un fichier progressif contenant une version maximum dudit objet, et une étape de transfert de la ou desdites parties dudit fichier progressif de l'entité source vers l'entité destination.

L'invention concerne aussi un programme d'ordinateur comportant des instructions pour la mise en oeuvre d'un tel procédé de transfert.

L'invention concerne aussi un système de transmission comportant une entité source et une entité destination aptes à la mise en oeuvre d'un tel procédé. Elle concerne aussi une telle entité source, par exemple un serveur, et une telle entité destination, par exemple un équipement électronique client.

L'invention concerne aussi un document informatique décrivant au moins une page destinée à être affichée sur un écran d'un équipement électronique, ledit document comportant au moins un point d'accès qui spécifie un fichier progressif organisé en plusieurs parties et contenant une version maximum d'un objet.

L'invention a d'importantes applications notamment dans le domaine de l'Internet. De plus en plus d'équipements ont un accès au réseau Internet. C'est le cas par exemple des ordinateurs personnels, des téléphones mobiles, des assistants numériques personnels, des ordinateurs portables, des ordinateurs de poche... Ces équipements ont des ressources matérielles et logicielles plus ou moins limitées (écran, capacité de calcul, capacité de stockage...), et se connectent au réseau Internet par des liaisons offrant des débits variés (liaisons radio, filaires, optiques...). Il est nécessaire d'adapter les objets à transférer en fonction du profil du destinataire. Cela permet notamment d'éviter de transmettre inutilement des données qui ne pourront pas être utilisées par le destinataire, et donc d'économiser de la bande passante.

### Arrière plan technologique de l'invention

La demande de brevet internationale WO 99/41734 décrit un procédé de transfert d'une certaine version d'un objet d'une entité source (par exemple un serveur Internet) vers une entité destination (par exemple un ordinateur personnel connecté à l'Internet).

Le procédé décrit dans cette demande de brevet internationale consiste à stocker au niveau du serveur Internet un fichier progressif organisé en plusieurs sections et contenant un objet graphique, et à fournir au client un ajout de programme pour navigateur adapté pour déterminer les sections dont il a besoin dans le fichier progressif, et pour transmettre audit serveur une requête qui spécifie lesdites sections, en vue de se faire transférer une version dudit objet adaptée à son profil ou à ses besoins.

L'ajout de programme pour navigateur (« browser plug-in » en anglais) utilisé par le client est spécifique et intelligent : il connaît le format de codage du fichier progressif et sait quelles sections il faut récupérer pour avoir telle ou telle résolution ou qualité de l'objet graphique.

Conformément à cet art antérieur, chaque client doit disposer d'un ajout de programme pour navigateur pour chaque format de fichier progressif susceptible d'être transféré. Ceci est complexe et coûteux.

### Résumé de l'invention

L'invention a notamment pour but de proposer un procédé de transfert qui ne présente pas cet inconvénient. Un procédé selon l'invention de transfert d'un objet, d'une entité source vers une entité destination, comporte
- une étape de transmission, de l'entité source vers l'entité destination, d'un document informatique décrivant au moins une page destinée à être affichée sur un écran, et comportant au moins un point d'accès qui spécifie un fichier progressif organisé en plusieurs parties et contenant une version maximum dudit objet, ledit point d'accès spécifiant au moins une ou plusieurs parties dudit fichier progressif correspondant à au moins une version dudit objet,
- une étape d'interprétation dudit document par l'entité destination,
- une étape de transmission d'une requête de ladite entité destination vers ladite entité source, ladite requête spécifiant une ou plusieurs parties dudit fichier progressif, obtenues par lecture dudit point d'accès,
- et une étape de transfert de la ou desdites parties dudit fichier progressif, de ladite entité source vers ladite entité destination.

Un point d'accès selon l'invention est par exemple constitué par une inclusion d'objet, ou par un lien vers un fichier contenant une certaine version d'un objet.

L'invention s'applique à des objets codés en utilisant un format de codage progressif. Conformément à l'invention, une version dite version maximum de l'objet est contenue dans un fichier progressif stocké au niveau de l'entité source. Lorsqu'une page propose un accès à un tel objet, l'entité source indique dans le document informatique qui décrit cette page et qu'elle transmet à l'entité destination, une ou plusieurs version(s) possible(s) pour ledit objet, avec les parties correspondantes du fichier progressif. L'entité destination n'a donc pas à déterminer elle-même les parties à transférer : elle les lit directement dans le document informatique reçu. Aucun ajout de programme pour navigateur n'est donc nécessaire.

Par ailleurs l'invention permet à un serveur de proposer des versions différentes d'un même objet par exemple sur différentes pages d'un même site Internet, sans qu'il lui soit pour autant nécessaire de stocker un fichier pour chaque version. A cet égard, l'invention permet donc de minimiser la quantité de données à stocker au niveau du serveur.

Dans un mode de réalisation avantageux de l'invention, le document informatique transmis par le serveur est un document HTML. Une inclusion d'objet est constituée par un élément OBJECT qui comporte un ou plusieurs sous-éléments PARAM correspondant chacun à une version dudit objet. Chaque sous-élément PARAM comporte un attribut VALUE qui contient les parties du fichier progressif qui correspondent à ladite version. Un lien est constitué par un élément A qui comporte un attribut « href ». L'attribut « href » comporte un identificateur de fragment qui contient la ou les parties du fichier qui doivent être transférées. L'entité destination envoie à l'entité source une requête HTTP relative à une méthode GET, qui comporte un entête RANGE dans lequel sont mentionnés la ou lesdites parties du fichier progressif qui sont spécifiées dans le lien ou dans l'inclusion.

L'invention a aussi pour but de proposer un document informatique tel que décrit dans le paragraphe introductif et caractérisé en ce que ledit point d'accès spécifie au moins une ou plusieurs parties dudit fichier progressif correspondant à au moins une version dudit objet.

L'invention a aussi pour but de proposer un serveur comportant des moyens de stockage d'au moins un fichier progressif organisé en plusieurs parties et contenant une version maximum d'un objet, et des moyens de stockage d'au moins un document informatique décrivant au moins une page destinée à être affichée sur un écran d'un équipement électronique, ledit document comportant au moins un point d'accès qui spécifie ledit fichier progressif, et ledit point d'accès spécifiant au moins une ou plusieurs parties dudit fichier progressif correspondant à au moins une version dudit objet.

L'invention a aussi pour but de proposer un équipement électronique qui comporte un écran, des moyens de réception et d'interprétation d'un document informatique décrivant au moins une page destinée à être affichée sur ledit écran, ledit document comportant au moins un point d'accès qui spécifie un fichier progressif organisé en plusieurs parties, contenant une version maximum d'un objet, et stocké dans une entité source, ledit point d'accès spécifiant au moins une ou plusieurs parties dudit fichier progressif correspondant à au moins une version dudit objet, et des moyens de transmission d'une requête vers ladite entité source, ladite requête spécifiant une ou plusieurs parties dudit fichier progressif, obtenues par lecture dudit point d'accès, en vue du transfert de la ou desdites parties dudit fichier progressif, de ladite entité source vers ladite entité destination.

### Brève description des figures

L'invention sera mieux comprise et d'autres détails apparaîtront dans la description qui va suivre en regard des dessins donnés à titre d'exemple non limitatifs et dans lesquels :
- la figure 1 est un schéma représentant un exemple de système de transmission selon l'invention,
- la figure 2 est un organigramme décrivant les opérations qui sont effectuées pour la mise en oeuvre d'un procédé de transfert selon l'invention.

### Description d'un mode de réalisation préférentiel de l'invention

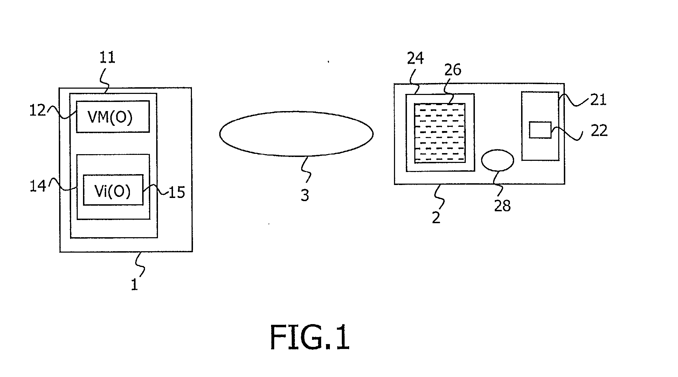

Sur la figure 1, on a représenté un exemple de système de transmission selon l'invention comportant une entité source 1, une entité destination 2, un réseau de transmission 3. L'entité source comporte une mémoire de stockage 11 qui contient un fichier 12. Le fichier 12 est un fichier progressif qui contient une version maximum VM(O) d'un objet O.

Un fichier progressif est un fichier organisé en plusieurs parties, une première partie donnant une première version de l'objet, et l'ajout de chaque partie suivante permettant ensuite obtenir des versions de plus en plus complètes du même objet.

A titre d'exemple le format de codage d'images JPEG 2000 (norme ISO/IEC FCD15444-1) est un format progressif. La norme JPEG 2000 prévoit l'utilisation de quatre schémas élémentaires de progressivité : par résolution, par qualité, par localisation spatiale et par composante. JPEG 2000 propose aussi cinq combinaisons de ces schémas élémentaires. Chaque schéma de progressivité correspond à une manière spécifique d'ordonner les données dans le flux binaire JPEG 2000. Par exemple, si un objet a été codé avec une progressivité par résolution, les premiers octets du fichier progressif donnent une faible résolution de l'objet, et les octets suivants permettent d'augmenter progressivement la résolution de l'objet.

La mémoire de stockage 11 contient aussi un document informatique 14. Le document informatique 14 décrit une page destinée à être affichée sur un écran. Il contient un point d'accès 15 qui spécifie le fichier progressif 12. Ce point d'accès est par exemple une inclusion d'une version Vi(O) de l'objet O, ou un lien vers une ou plusieurs parties du fichier progressif 12, qui correspondent à une version Vi(O) de l'objet O.

L'entité destination 2 comporte une mémoire 21 dans laquelle est stockée un programme 22 appelé agent utilisateur (d'une façon générale un agent utilisateur est un programme qui interprète des documents de type HTML; un navigateur est un exemple d'agent utilisateur ; en anglais on utilise couramment le terme « user agent »). L'entité destination 2 comporte aussi un écran de visualisation 24 permettant notamment de visualiser une page 26 décrite dans un document informatique reçu via le réseau de transmission 3. Elle comporte également des moyens 28 d'activation de liens susceptibles d'être proposés dans une telle page. Ces moyens 28 d'activation de liens sont par exemple constitués par une souris, par des touches de clavier, ou par une commande vocale. L'agent utilisateur 22 a notamment pour fonction d'interpréter des documents informatiques reçus via le réseau de transmission 3, qui décrivent une ou plusieurs pages destinées à être affichées sur l'écran 24. En particulier, lorsqu'il rencontre un élément décrivant une inclusion d'objet, il émet une requête afin de se faire transférer ledit objet. L'agent utilisateur 22 a également pour fonction d'émettre une requête à chaque fois qu'un lien est activé par un utilisateur, en vue du transfert du fichier ou de la partie de fichier identifié par ledit lien.

D'une façon générale, une inclusion d'objet spécifie la localisation des données qui constituent l'objet. Cette localisation a la forme d'un identificateur de ressources. Conformément à l'invention, lorsque le fichier est un fichier progressif contenant une version maximum d'un objet, l'inclusion spécifie, en plus, au moins une ou plusieurs parties du fichier qui correspondent à une version de l'objet. Dans certains cas, elle spécifie plusieurs ensembles d'une ou plusieurs parties de fichier correspondant à différentes versions de l'objet. L'agent utilisateur 22 lit la ou les versions proposées. Si plusieurs versions sont proposées, il choisit celle qui est adaptée à ses besoins. Puis, il émet une requête vers l'entité source 1 pour se faire transférer ladite version. Cette requête spécifie la ou les parties de fichier correspondant à la version à transmettre, en plus de l'identificateur de ressources relatif audit fichier.

Les documents informatiques qui décrivent les pages à visualiser sont par exemple des documents HTML4 (HTML4 est un langage de description de contenu défini par le consortium W3C). Dans ce cas, on utilise avantageusement les éléments « OBJECT » pour faire des inclusions relatives à un fichier. L'attribut « DATA » est utilisé pour identifier le fichier. Il contient un identificateur de ressources relatif audit fichier. L'attribut « TYPE » est utilisé pour spécifier le type du fichier. Conformément à l'invention, lorsque le fichier en cause est un fichier progressif qui contient une version maximum d'un objet, un ou plusieurs sous-éléments « PARAM » sont contenus dans l'élément «OBJECT ». Chaque sous-élément « PARAM » est utilisé pour spécifier une ou plusieurs parties du fichier progressif correspondant à une version de l'objet. Un sous-élément « PARAM » contient un attribut « NAME » qui indique le nom du sous-élément, et un attribut « VALUE » qui indique la ou lesdites parties du fichier. Les sous-éléments PARAM qui sont utilisés pour spécifier une ou plusieurs parties du fichier progressif correspondant à une version d'un objet ont tous le même nom. Dans les exemples qui seront donnés par la suite, on utilise le nom «retrieveParameters». Lorsque plusieurs versions sont proposées, l'attribut « VALUE » contient aussi un identifiant de version permettant à l'agent utilisateur 22 de reconnaître les versions proposées et de faire son choix. Dans les exemples qui seront donnés par la suite, on utilise deux identificateurs de versions « Resolution 640x480 » et «Resolution 800x600». La signification des identificateurs de versions doit être connue de l'entité source et de l'entité destination. Dans cet exemple, l'agent utilisateur 22 choisit la version 640x480 ou la version 800x600 en fonction de la taille de l'écran 24.

Une autre façon de spécifier une ou plusieurs parties d'un fichier est de compléter l'identificateur de ressources contenu dans l'attribut « DATA » par un identificateur de fragment. Pour cela, et afin de rester conforme à la recommandation RFC2396 de l'IETF qui décrit syntaxe générique des identificateurs de ressources (Uniform Resource Identifier en anglais), on utilise par exemple une syntaxe du type « myImage.jp2#0-29_40-59_60-99 » pour signifier que l'inclusion porte sur les plages d'octets 0 à 29, 40 à 59 et 60 à 99 d'un fichier myImage.jp2. Dans cet exemple, l'identificateur de ressources est constitué par « myImage.jp2 », et l'identificateur de fragment par « 0-29_40-59_60-99 ». Conformément à ce que prévoit la RFC 2396, l'identificateur de ressources est séparé de l'identificateur de fragment par le signe «# ». Le signe « _ » est utilisé pour séparer les différentes plages d'octets les unes des autres parce que la RFC2396 ne permet pas d'utiliser d'espacements.

La recommandation HTML4.01 utilise des éléments « A » pour placer des liens dans un document informatique. Un élément « A » contient un attribut « href » qui spécifie un identificateur de ressources éventuellement suivi d'un identificateur de fragment. Conformément à l'invention, une syntaxe du type « <A href : " myImage.jp2#0-29_40-59_60-99 "></A> est utilisée pour spécifier une ou plusieurs parties de fichier dans un lien.

La requête émise par l'entité destination 2 est par exemple une requête HTTP (HTTP est le protocole de transfert hypertexte définit dans la RFC2616 et couramment utilisé sur l'Internet). Par exemple, cette requête est relative à une méthode « GET », et elle comporte un entête « RANGE » dans lequel sont mentionnés la ou lesdites parties du fichier progressif qui doivent être transférées. Pour plus de détail on se reportera à la RFC 2616 qui décrit la version HTTP/1.1. D'une façon générale, un message de requête HTTP contient un identificateur de la méthode utilisée (GET ici), un identificateur de ressources pour identifier les ressources sur lesquelles portent la requête, et un identificateur de la version HTTP utilisée. Conformément à l'invention on utilise en plus un entête RANGE tel que décrit au paragraphe 14.35 de la RFC 2616 pour indiquer les parties du fichier concernées par la requête.

On va maintenant donner deux exemples d'applications de l'invention. Dans un premier exemple d'application de l'invention, une image est incluse dans une page, mais l'agent utilisateur 22 a le choix de la version qui sera affichée. Dans ce cas, le code HTML de la page web contient un élément « OBJECT » du type :

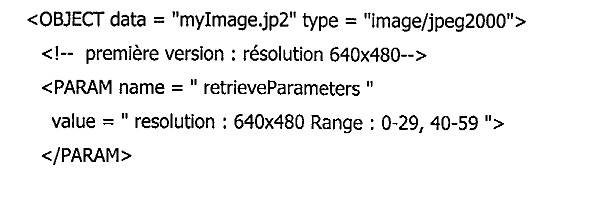

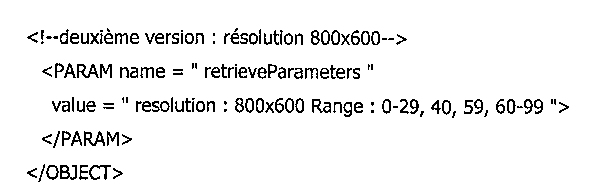

Pour cette même application, on peut également utiliser la syntaxe suivante où différents objets sont imbriqués, chacun pouvant être caractérisé par un élément PARAM donnant les plages du fichier à transférer. Selon la syntaxe HTML4.01 expliquée au chapitre 13.3.1 de la norme, l'agent utilisateur 22 essaie de rendre le premier objet dans la hiérarchie, éventuellement caractérisé par un élément PARAM. S'il ne peut pas le rendre, il essaie de rendre l'objet inclus dans ce premier objet, lui-même éventuellement caractérisé par un élément PARAM, et ainsi de suite, l'imbrication des objets donnant une séquence de versions d'un même objet, une seule version devant être rendue par l'agent utilisateur 22.

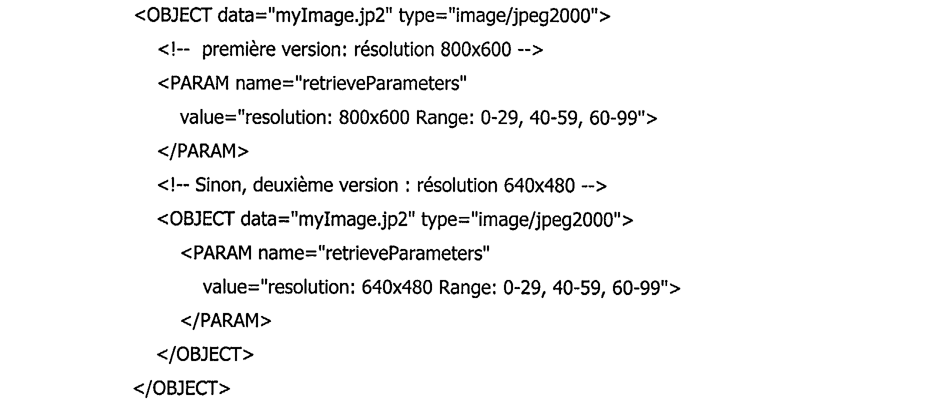

Dans un deuxième exemple d'application de l'invention, un site web propose une image en format timbre poste sur sa page d'accueil pour éviter d'avoir à télécharger de grandes quantités de données, et permet à l'utilisateur de télécharger une image de taille supérieure en cliquant sur l'image timbre poste. Dans ce cas le code HTML de la page d'accueil est du type :

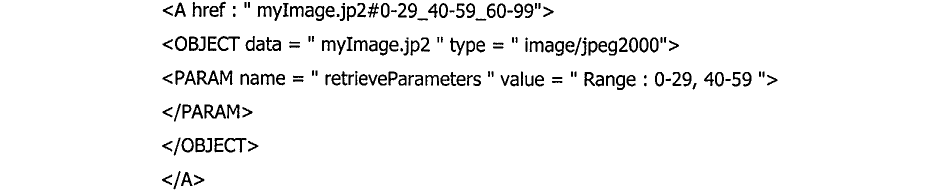

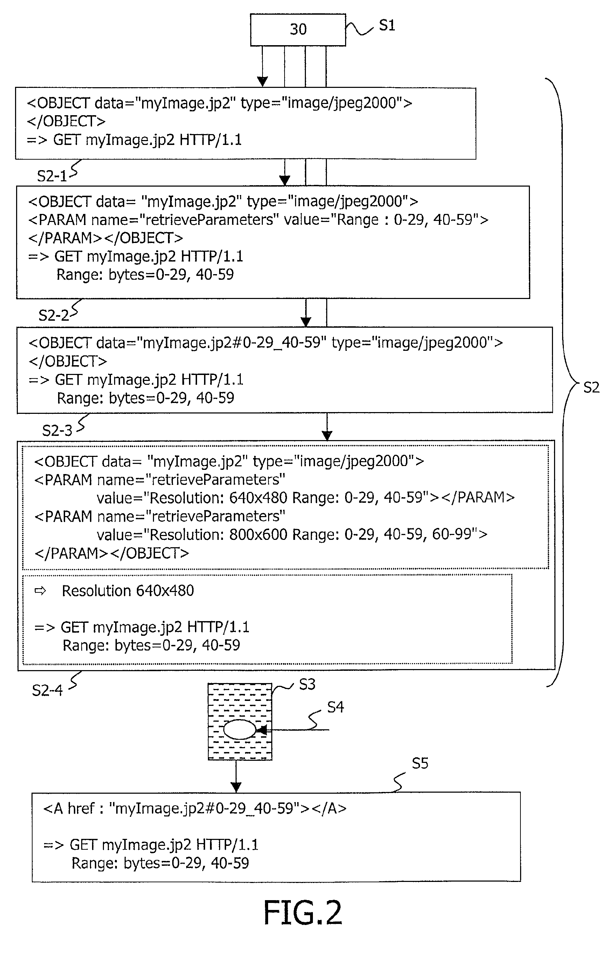

Sur la figure 2, on a représenté un organigramme décrivant les opérations qui sont effectuées pour la mise en oeuvre d'un procédé de transfert selon l'invention.
A l'étape S1, une entité destination 2 reçoit un document informatique 30 qui décrit une page 32.
A l'étape S2, l'agent utilisateur 22 de l'entité de destination 2 interprète ce document informatique 30 pour afficher la page 32 sur l'écran 24. Pour cela, le navigateur parcourt le document informatique 30.
- Lorsqu'il rencontre un élément OBJECT qui ne contient pas de sous élément PARAM (case S2-1), il émet une requête HTTP qui porte sur la totalité du fichier concerné.
- Lorsqu'il rencontre un élément OBJECT qui contient un unique sous-élément PARAM intitulé « retrieveParameter », qui indique une ou plusieurs parties de fichier à récupérer (case S2-2), il émet une requête HTTP qui inclut un entête RANGE et dont le contenu est constitué par la valeur du sous-élément PARAM, c'est-à-dire par les parties du fichier à récupérer.
- De même, lorsqu'il rencontre un élément OBJECT dont l'attribut « DATA » contient un identificateur de fragment (case S2-3), il émet une requête HTTP qui inclut un entête RANGE spécifiant la ou les plages d'octets indiquées par l'identificateur de fragment.
- Enfin, lorsqu'il rencontre un élément OBJECT qui contient plusieurs sous-éléments PARAM intitulés « retrieveParameter » correspondant chacun à une version différente d'un même objet, ou lorsqu'il rencontre un élément OBJECT qui contient un ou plusieurs sous-éléments OBJECT éventuellement caractérisés par un élément PARAM correspondant chacun à une version différente d'un même objet (case S2-4), il choisit parmi les versions proposées celle qui est adaptée à ses besoins. Des identificateurs des différentes versions, ainsi que les parties de fichier correspondantes, sont indiqués dans l'attribut « VALUE » des sous-éléments PARAM. Puis il émet une requête HTTP qui inclut un entête RANGE dont le contenu est constitué par les parties de fichier indiquées dans l'attribut « VALUE » du sous-élément choisi. Par exemple, si le navigateur choisit la version identifiée par « resolution 640x480 », l'entête RANGE contient l'expression « Range : 0-29, 40-59 ».
A l'étape S3, l'agent utilisateur 22 affiche la page 32 sur l'écran 24.
A l'étape S4, l'utilisateur active un lien proposé dans la page 32. L'agent utilisateur 22 émet alors une requête HTTP qui reprend l'identificateur de ressources spécifié dans le lien et, lorsque le lien spécifie en plus un identificateur de fragment, qui inclut en plus un entête RANGE dont le contenu est constitué la ou les plages d'octets indiquées par l'identificateur de fragment.

L'invention ne se limite pas à l'utilisation de HTML4. Elle est applicable à d'autres langages du même type, par exemple à XHTML, ou aux langages définis dans les environnements WAP ou I-MODE utilisés pour les applications Internet sur mobile). De même, l'invention n'est pas limitée à l'utilisation du protocole réseau HTTP. Elle est applicable à tout protocole réseau fiable qui permet de préciser des plages d'octets à récupérer. Par exemple, elle est applicable aux protocoles utilisés dans les environnements WAP ou I-MODE. Enfin, l'invention n'est pas non plus limitée à l'utilisation de la norme de codage JPEG 2000. Elle est applicable à tout type de fichier progressif, par exemple à un fichier vidéo MPEG-4.

## Revendications

1. Document informatique décrivant au moins une page destinée à être affichée sur un écran d'un équipement électronique, ledit document comportant au moins un point d'accès qui spécifie un fichier progressif organisé en plusieurs parties et contenant une version maximum d'un objet, **caractérisé en ce que** ledit point d'accès spécifie au moins une ou plusieurs parties dudit fichier progressif correspondant à au moins une version dudit objet.

2. Document informatique selon la revendication 1, **caractérisé en ce que** ledit point d'accès est une inclusion.

3. Document informatique selon la revendication 1, **caractérisé en ce que** ledit point d'accès est un lien vers ledit fichier progressif.

4. Procédé de transfert d'un objet d'une entité source vers une entité destination, comportant :
- une étape de transmission, de l'entité source vers l'entité destination, d'un document informatique décrivant au moins une page destinée à être affichée sur un écran, et comportant au moins un point d'accès qui spécifie un fichier progressif organisé en plusieurs parties et contenant une version maximum dudit objet, ledit point d'accès spécifiant au moins une ou plusieurs parties dudit fichier progressif correspondant à au moins une version dudit objet,
- une étape d'interprétation dudit document par l'entité destination,
- une étape de transmission d'une requête de ladite entité destination vers ladite entité source, ladite requête spécifiant une ou plusieurs parties dudit fichier progressif, obtenues par lecture dudit point d'accès,
- et une étape de transfert de la ou desdites parties dudit fichier progressif, de ladite entité source vers ladite entité destination.

5. Produit programme d'ordinateur comportant des instructions pour la mise en oeuvre d'un procédé de transfert selon la revendication 4.

6. Serveur comportant des moyens de stockage :
- d'au moins un fichier progressif organisé en plusieurs parties et contenant une version maximum d'un objet,
- et d'au moins un document informatique décrivant au moins une page destinée à être affichée sur un écran d'un équipement électronique, ledit document comportant au moins un point d'accès qui spécifie ledit fichier progressif,
**caractérisé en ce que** ledit point d'accès spécifie au moins une ou plusieurs parties dudit fichier progressif correspondant à au moins une version dudit objet.

7. Equipement électronique comportant :
- un écran,
- des moyens de réception et d'interprétation d'un document informatique décrivant au moins une page destinée à être affichée sur ledit écran, ledit document comportant au moins un point d'accès qui spécifie un fichier progressif organisé en plusieurs parties, contenant une version maximum d'un objet, et stocké dans une entité source, et ledit point d'accès spécifiant au moins une ou plusieurs parties dudit fichier progressif correspondant à au moins une version dudit objet
- et des moyens de transmission d'une requête vers ladite entité source, ladite requête spécifiant une ou plusieurs parties dudit fichier progressif, obtenues par lecture dudit point d'accès, en vue du transfert de la ou desdites parties de ladite entité source vers ladite entité destination.

8. Equipement électronique selon la revendication 8, **caractérisé en ce que** ladite requête est une requête HTTP relative à une méthode GET portant sur ledit fichier progressif, ladite requête comportant un entête RANGE dans lequel sont mentionnés la ou lesdites parties du fichier progressif qui doivent être transférées.

9. Système de transmission comportant au moins une entité source et une entité destination,
- ladite entité source comportant des moyens de stockage d'au moins un fichier progressif organisé en plusieurs parties et contenant une version maximum d'un objet, et d'au moins un document informatique décrivant au moins une page destinée à être affichée sur un écran, ledit document comportant au moins un point d'accès qui spécifie ledit fichier progressif, ledit point d'accès spécifiant au moins une ou plusieurs parties dudit fichier progressif correspondant à au moins une version dudit objet, et des moyens de transmission dudit document informatique vers ladite entité destination, et des moyens de transmission de tout ou partie dudit fichier progressif,
- ladite entité destination comportant des moyens de réception et d'interprétation dudit document informatique, et des moyens de transmission d'une requête vers ladite entité source, ladite requête spécifiant une ou plusieurs parties dudit fichier progressif, obtenues par lecture dudit point d'accès en vue du transfert de la ou desdites parties du fichier progressif, de ladite entité source vers ladite entité destination.
